Europäisches Patentamt

European Patent Office

Office européen des brevets

(19)

(11) Publication number: **0 291 331 B1**

(12) **EUROPEAN PATENT SPECIFICATION**

(45) Date of publication of patent specification: **16.09.92**     (51) Int. Cl.5: **F16L  21/06**, F16L 23/04

(21) Application number: **88304362.2**

(22) Date of filing: **13.05.88**

(54) **Pipe couplings.**

(30) Priority: **14.05.87 ZA 873470**

(43) Date of publication of application:
**17.11.88 Bulletin  88/46**

(45) Publication of the grant of the patent:
**16.09.92 Bulletin  92/38**

(84) Designated Contracting States:
**AT BE CH DE ES FR GB GR IT LI LU NL SE**

(56) References cited:
**DE-B- 2 341 814        DE-U- 1 790 246**
**DE-U- 7 145 278        FR-A- 2 237 111**
**GB-A- 866 626          GB-A- 2 161 882**
**US-A- 3 476 410        US-A- 4 391 458**
**US-A- 4 408 788**

(73) Proprietor: **DORBYL LIGHT AND GENERAL EN-
GINEERING (PROPRIETARY) LIMITED
4th Floor, Dorbyl Park 4 Skeen Boulevard
Bedfordview Transvaal(ZA)**

(72) Inventor: **Vine, John Rodney Somers
8 Louw Avenue Lakefield
Benoni Transvaal(ZA)**

(74) Representative: **Skone James, Robert Edmund
et al
GILL JENNINGS & EVERY 53-64 Chancery
Lane
London WC2A 1HN(GB)**

EP 0 291 331 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

THIS invention relates to a pipe coupling and, preferably, to a VICTAULIC-type coupling.

VICTAULIC couplings generally comprise a pair of half shells, together forming a sleeve which can be placed around adjacent shouldered or grooved ends of a pair of pipes which have been located in co-axial end-to-end relationship for joining. The half shells are formed with ridges which are adapted to fit into or around the formations on the pipe ends to secure the pipe ends together in a strong mechanical joint. A rubber ring is located within a channel formed within the sleeve defined by the half shells, to provide a fluid tight joint.

In prior art VICTAULIC couplings, the half shells are provided with securement ends, constituted by radially projecting flanges which are formed with bolt holes through which bolts can be passed for fastening by means of nuts.

The problem with couplings of this type is that they frequently require more than one person to assemble, particularly in confined spaces, since, in essence, more than one pair of hands is needed to hold the two half shells together and to insert the bolts into the bolt holes.

Pipe couplings are known in which the half shells are interconnected or releasably interconnectable. US-A-4,391,458 - Blakeley Engineering Limited - describes a pipe coupling of the first kind in which the two half shells are hinged together at one pair of engagement flanges and intended for securement by means of a bolt and nut arrangement, at the opposed pair of engagement flanges.

GB-A-2,161,882 - Stanton and Staveley Limited - describes a variation on this format. In this patent, the half shells are hinged together on formations which, in essence, constitute a separable hinge, so that the half shells are separably interconnected. The interconnectability of the half shells overcomes the problem mentioned above, namely that of requiring two people to assemble the coupling on a pair of pipe ends, since the half shells, once interconnected on the hinge formation are at least retained in position on the pipe ends. This means that a single person can manoeuvre the coupling and the pipe ends with one hand, while securing the half shells together with the bolt and nut, using the other hand. For additional examples of hooked connections in pipe couplings, see US-A-3,476,410 as well as FR-A-2,237,111.

Couplings comprising non-identical half shells, lead to increased manufacturing and inventory costs.

An example of the use of identical half shells is described in US-A-4,408,788 - Grinell Fire Protection Systems Company, Inc. - in which the radially extending securement flanges are tapered to allow the half shells to swing open after the attachment, to one of the securement flanges, of the bolt and nut fastening. A further example of identical half shells is to be found in DE-B-2,341,814 for a pipe clamp which uses interengaging formations each comprising an arm and a head.

These examples do not completely overcome the problems of the prior art, since the half shells are not readily disengagable in the open position.

According to the present invention there is provided a pipe coupling as defined by claim 1.

The abutting surface of each head preferably faces the other way to the mating faces of the half shell. The abutting surface of each head may be substantially co-planer with the mating faces of the half shell.

The half shells may include interlocking formations which in use prevent axial dislocation of the half shells. In one form of the invention the interlocking formations comprise complemental ribs and grooves on the abutting surfaces of the heads. In another form of the invention the interlocking formations comprise complemental projections and recesses on the mating faces of the half shells.

Examples of couplings in accordance with the present invention will now be described with reference to the accompanying drawings in which:-

Figure 1     is an isometric view of a partly uncoupled Victaulic coupling according to one embodiment of the invention;

figure 2     is an isometric view of an alternative embodiment of the invention illustrating a different means of engagement for the half shells;

figure 3     is an isometric view of a further embodiment of the invention illustrating a different means of engagement for the half shells;

figure 4     is an isometric view of one half of the coupling of figure 3; and

figure 5     is a side elevation of a half shell for the coupling of figures 3 and 4.

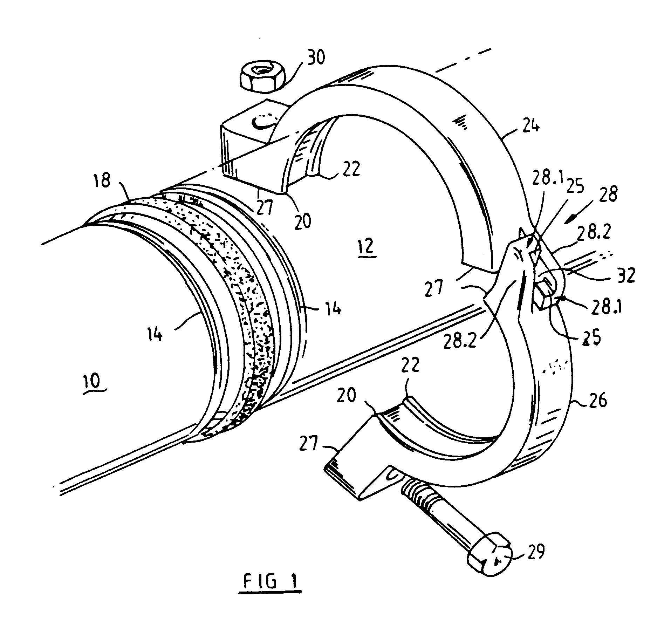

In figure 1, a pair of pipes 10 and 12 to be connected to one another are located co-axially in end to end relationship. The pipe ends are formed with Victaulic-type grooves or shoulders 14 and 16 which are dimensioned to accept the sides of a rubber sealing ring 18 and the edges of a pair of peripheral ridges 20 and 22 formed on a pair of half shells 24 and 26.

The half shells 24 and 26 are provided with engageable formations 28. Each engageable formation 28 comprises an arm 28.2 and a head 28.1. Each arm 28.2 projects radially from the outer surface of its half shell and is located on one side of the transverse centre line 31 of its half shell. Each head 28.1 extends axially away from its arm 28.2 beyond the transverse centre line 31. Each head 28.1 is provided with an abutting surface or flat face 25 which is co-planar with and opposed to the mating faces 27 of its half shell. A gap 32 exists between the bottom of each flat face 25 and the adjacent mating face 27 of each half shell so that the head of one half shell can overlap the head of the other half shell, the arms 28.2 being spread from one another. A hinge is thus formed by the engageable formations 28 about which the half shells can pivot between an open position in which the half shells can be fitted over the pipes, and a closed position in which the abutting surfaces abut one another. In figure 5, where the one half shell 24 is shown in side elevation and the other half shell 26 engaged therewith is shown in dotted outline, also in side elevation, the flat faces 25 are shown abutting one another. In the closed position a bolt 29 and a nut 30 are used to secure the ends of the half shells remote from the engageable formations together.

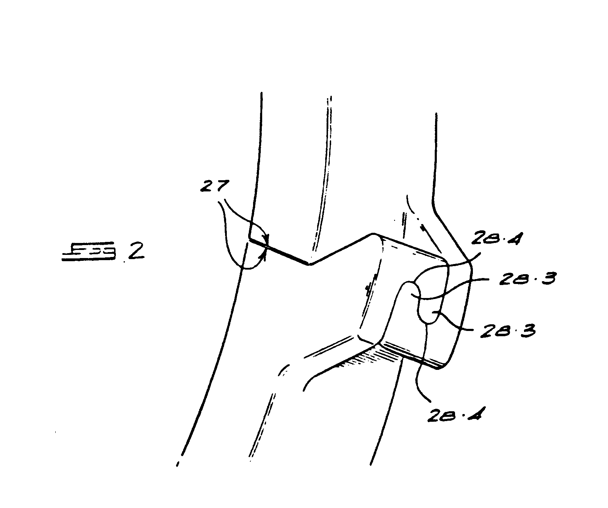

An alternative pair of engageable formations is shown in figure 2. The flat faces 25 of the heads 28.1 are each provided with an additional in-curved lip on the outer edge thereof, the lips defining ribs 28.3 and grooves 28.4 which are adapted to interlock. By this means the axial displacement of the half shells relatively to one another can be prevented in all but the substantially open position of the half shells. The advantage of this arrangement is that the half shells will not be separated inadvertently during storage or handling.

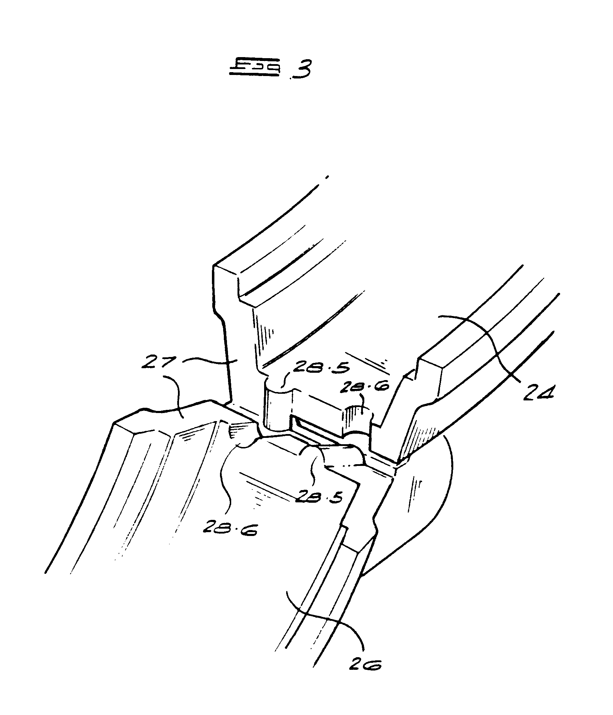

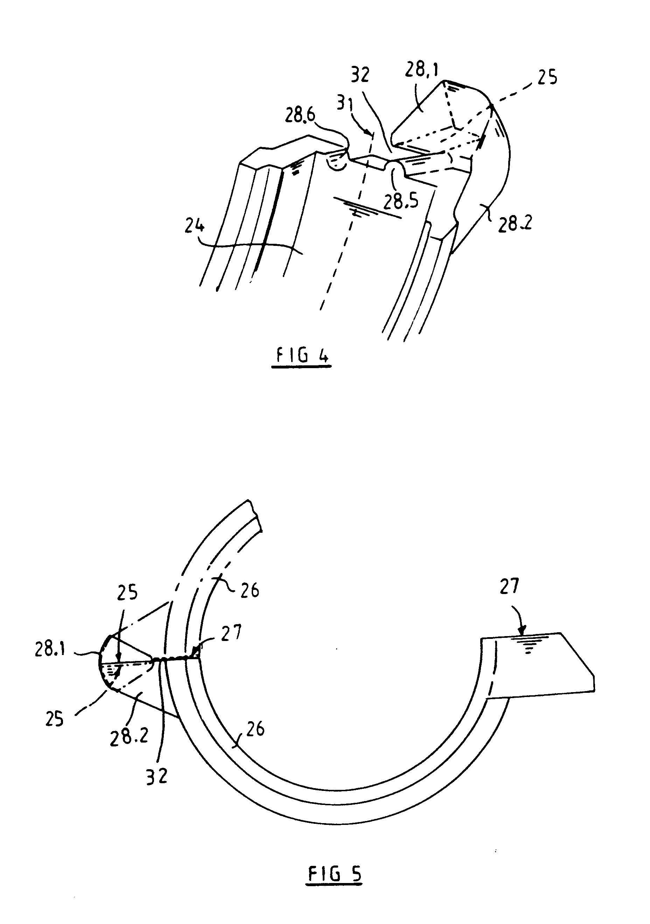

The embodiment shown in figures 3 and 4 has the same advantage. In this arrangement a pair of projections 28.5 are formed, one on each half shell 24, 26. A corresponding, complemental recess 28.6 is formed in each half shell opposite each projection 28.5. The projections and recesses are provided adjacent the pivot point of the half shells. Upon interengagement of the projections 28.5 and the recesses 28.6, the axial displacement of the half shells relatively to one another is likewise prevented.

## Claims

1. A pipe coupling for forming a pipe joint between adjacent ends of two pipes (10, 12) located in co-axial, end-to-end relationship comprising a pair of discrete, substantially identical half shells (24, 26) each being adapted on one end thereof to receive fastening means (29, 30) for securing the half shells to one another at that end, each half shell including on the other end thereof a formation (28) which is engageable with the corresponding formation (28) of the other half shell to complete the connection of the half shells to one another, each formation (28) comprising an arm (28.2) and a head (28.1), characterised in that the arm projects radially from the outer surface of the shell and is located on one side of the transverse centre line (31) of the half shell, the head extending substantially axially away from the arm beyond the transverse centre line of the half shell; each head having an abutting surface (25) to abut a corresponding surface on the other head and there being a gap (32) between the radially inner portion of the abutting surface and an adjacent mating face (27) of the half shell which mates with a corresponding surface on the other half shell, so that in use the head of one half shell can overlap the head of the other half shell and the arms (28.2) are spaced from one another, thereby forming a hinge about which the half shells can pivot between an open position in which the half shells can be fitted over the pipes, and a closed position in which the abutting surfaces abut one another.

2. The pipe coupling of claim 1 wherein at least part of the abutting surface of each head faces the other way to the mating faces of the half shell.

3. The pipe coupling of claim 2 wherein the abutting surface of each head is substantially co-planar with the mating faces of the half shell.

4. The pipe coupling of any of the above claims wherein the half shells include interlocking formations which in use prevent axial dislocation of the half shells.

5. The pipe coupling of claim 4 wherein the interlocking formations comprise complemental ribs (28.3) and grooves (28.4) on the abutting surfaces of the heads.

6. The pipe coupling of claim 4 wherein the interlocking formations comprise complemental projections (28.5) and recesses (28.6) on the mating faces of the half shells.

## Patentansprüche

1. Rohrverbindung zum Bilden einer Rohrverbindungsstelle zwischen benachbarten Enden zweier Rohre (10, 12), die koaxial hintereinander angeordnet sind, die ein Paar von diskreten, im wesentlichen identische Schellenhälften (24, 26) umfasst, von denen jede an einem Ende Befestigungsmittel (29, 30) aufnehmen kann, um die Schellenhälften an dem Ende aneinander zu befestigen, wobei jede Schellenhälfte an ihrem anderen Ende eine Formation (28) einschliesst, die mit der entsprechenden Formation (28) der anderen Schellenhälfte in Eingriff stehen kann, um die Verbindung der Schellenhälften miteinander zu vervollständigen, wobei jede Formation (28) einen Arm (28.2) und einen Kopf (28.1) umfasst, dadurch gekennzeichnet, dass der Arm radial von der äusseren Oberfläche der Schelle hervorragt und auf einer Seite der transversalen Mittellinie (31) der Schellenhälfte angeordnet ist, wobei der Kopf sich im wesentlichen axial von dem Arm hinweg über die transversale Mittellinie der Schellenhälfte hinaus erstreckt; wobei jeder Kopf eine angrenzende Oberfläche (25) hat, um an eine entsprechende Oberfläche auf dem anderen Kopf anzugrenzen, und es einen Spalt (32) zwischen dem radial verlaufendem inneren Teil der angrenzenden Oberfläche gibt, und eine benachbarte kämmende Fläche (27) der Schellenhälfte, die mit einer entsprechenden Oberfläche auf der anderen Schellenhälfte kämmt, so dass der Kopf einer Schellenhälfte während des Gebrauches den Kopf der anderen Schellenhälfte überlappen kann und die Arme (28.2) voneinander entfernt sind, um dabei ein Scharnier zu bilden, um das die Schellenhälften zwischen einer offenen Stellung, in der die Schellenhälften über die Rohre angebracht werden können, und einer geschlossenen Stellung, in der die angrenzenden Oberflächen aneinander angrenzen, schwenken können.

2. Rohrverbindung nach Anspruch 1, worin wenigstens ein Teil der angrenzenden Oberfläche jedes Kopfes in die andere Richtung zu den kämmenden Flächen der Schellenhälften zeigt.

3. Rohrverbindung nach Anspruch 2, worin die angrenzende Oberfläche jedes Kopfes im wesentlichen mit den kämmenden Flächen der Schellenhälfte koplanar ist.

4. Rohrverbindung nach einem der vorhergehenden Ansprüche, worin die Schellenhälften ineinandergreifende Formationen einschliessen, die axiale Verschiebung der Schellenhälften während des Gebrauches verhindern.

5. Rohrverbindung nach Anspruch 4, worin die ineinandergreifenden Formationen komplementäre Streben (28.3) und Nuten (28.4) auf den angrenzenden Oberflächen der Köpfe umfassen.

6. Rohrverbindung nach Anspruch 4, worin die ineinandergreifenden Formationen komplementäre Vorsprünge (28.5) und Aussparungen (28.6) auf den kämmenden Flächen der Schellenhälften umfassen.

## Revendications

1. Accouplement de tuyauterie pour former un raccord de tuyau entre les extrémités voisines de deux tuyaux (10, 12) situés en rapport coaxial bout-à-bout comportant une paire de demi-coquilles discrètes essentiellement identiques (24, 26) chacune adaptée à une extrémité pour recevoir les moyens de fixation pour fixer les deux demi-coquilles l'une à l'autre à ladite extrémité, chaque demi-coquille comportant à l'autre extrémité un agencement (28) susceptible d'engagement avec l'agencement correspondant (28) de l'autre demi-coquille pour compléter le raccord des demi-coquilles l'une à l'autre, chaque agencement (28) comportant un bras (28.2) et une tête, **caractérisé en ce que** le bras est en saillie radiale de la surface extérieure de coquille et située d'un côté de l'axe transversal (31) de la demi-coquille, la tête projetée essentiellement en sens axial éloigné du bras au delà de l'axe transversal de demi-coquille; chaque tête ayant une surface venant en butée (25) avec une surface correspondante sur l'autre tête et un entrefer (32) étant prévu entre la zone intérieure radiale de la surface en butée et une surface voisine correspondante (27) de la demi-coquille qui épouse une surface correspondante de l'autre demi-coquille, de telle façon qu'en service la tête d'une demi-coquille chevauche la tête de l'autre demi-coquille et les bras (28.2) sont espacés par rapport l'un à l'autre, formant ainsi une charnière à partir de laquelle les demi-coquilles pivotent entre une position ouverte lors de la pose des demi-coquilles sur les conduits, et la position fermée lors de laquelle les surfaces en butées butent l'une contre l'autre.

2. Accouplement de tuyauterie selon la revendication 1 suivant lequel une section au minimum de la surface en butée de chaque tête se trouve en sens opposé par rapport aux surfaces correspondantes de la demi-coquille.

3. Accouplement de tuyauterie selon la revendication 2 dont la surface en butée de chaque demi-coquille est essentiellement co-planaire avec les surfaces correspondantes de la demi-coquille.

4. Accouplement de tuyauterie selon l'une ou l'autre des revendication ci-avant dont les demi-coquilles prévoient des agencements à verrouillage qui entravent la dislocation axiale des demi-coquilles en service.

5. Accouplement de tuyauterie selon la revendication 4 dont les agencements à verrouillage comportent un complément de nervures (28.3) et de rainures (28.4) sur les surfaces en butée des têtes.

6. Accouplement de tuyauterie selon la revendication 4 dont les agencements à verrouillage comportent un complément de nervures (28.5) et de rainures (28.6) sur les surfaces correspondantes des demi-coquilles.

FIG 1

Fig. 2

Fig. 3

FIG 4

FIG 5